# EUROPEAN PATENT APPLICATION

(11) **EP 4 324 364 A1**
(43) Date of publication of application: **21.02.2024**
(21) Application number: 22190703.3
(22) Date of filing: 17.08.2022
(51) Int. Cl.: A47J 43/044, A47J 43/07, A47J 19/02

(54) **JUICER ACCESSORY, JUICER AND METHOD OF USING THE SAME**

(71) Applicant: Versuni Holding B.V., 5656 AE Eindhoven (NL)
(72) Inventor: HIETBRINK, Ingrid, 5656 AE Eindhoven (NL)
(74) Representative: Vollering, Stefanus Franciscus Maria

(57) **Abstract**

Provided is a juicer accessory (100) for a handheld kitchen appliance having a motorized drive system. The juicer accessory comprises a food shredding member (102) arranged to be rotated by the motorized drive system. The juice accessory also includes a feeding tube (104) in which food is receivable. The feeding tube is cooperable with, for example attachable to, the handheld kitchen appliance such that the feeding tube is movable together with the handheld kitchen appliance. The food is deliverable through the feeding tube towards the food shredding member. The juicer accessory further comprises a food support (106) receivable in the feeding tube to support the food. The feeding tube is movable relative to the food support such that, when the handheld kitchen appliance with the feeding tube cooperating therewith is moved to bring the food shredding member towards the food support, the food in the feeding tube is pressed by the food support against the food shredding member to release juice from the food. Further provided is a juicer comprising the juicer accessory, and a method of juicing using such a juicer accessory.

## Description

### FIELD OF THE INVENTION

The invention relates to a juicer accessory for a handheld kitchen appliance having a motorized drive system, and a juicer comprising the juicer accessory and the handheld kitchen appliance. The invention further relates to a method of juicing using such a juicer accessory.

### BACKGROUND OF THE INVENTION

Healthy nutrition is promoted with the term '5-a-day', which means that people should consume five portions of fruit and vegetables each day.

Making juice from fruit and/or vegetables can provide consumers with a straightforward way of helping them to consume their '5-a-day'.

Consumers may wish to consume clear juice or smoothies in which fibrous particles are suspended in the juice. Sieving may represent a very important step for those who do not enjoy smoothies and/or for those who like to make so-called 'power shots'. Power shots are healthy juices served in relatively small portions with ginger, curcumin and/or turmeric. Such ingredients can include hard fibers that are often desirable to remove prior to consuming the shot of juice.

To prepare clear juices and smoothies, the consumer has tended to require multiple devices, such as juicers, blenders and citrus presses, on their countertop making storage challenging.

It would be desirable to find a way to allow the consumer to prepare fresh fruit and vegetable drinks, for example a relatively small amount of such drinks for consumption on the go, in a relatively simple and low-cost manner which minimizes addition of new equipment to the consumer's kitchen storage.

### SUMMARY OF THE INVENTION

The invention is defined by the claims.

According to examples in accordance with an aspect of the invention, there is provided a juicer accessory for a handheld kitchen appliance having a motorized drive system, the juicer accessory comprising: a food shredding member arranged to be rotated by the motorized drive system; a feeding tube in which food is receivable, the feeding tube being cooperable with the handheld kitchen appliance such that the feeding tube is movable together with the handheld kitchen appliance, the food being deliverable through the feeding tube towards the food shredding member; and a food support receivable in the feeding tube to support the food, wherein the feeding tube is movable relative to the food support such that, when the handheld kitchen appliance with the feeding tube cooperating therewith is moved to bring the food shredding member towards the food support, said food in the feeding tube is pressed by the food support against the food shredding member to release juice from the food.

The juicer accessory enables juicing using a handheld kitchen appliance. Handheld kitchen appliances are relatively compact and may, depending on the attachment selected to be rotated by the motorized drive system, provide various food processing functionalities. The juicer accessory may assist in terms of adding a juicing functionality whilst minimizing loss of kitchen storage space.

By cooperation of the feeding tube with, e.g. by attachment of the feeding tube to, the handheld kitchen appliance, the handheld kitchen appliance can be advanced together with the feeding tube towards the food support, e.g. a statically mounted food support.

This can be regarded as a contrasting approach to that used in conventional juicers in which a pusher is used to press food in a feeding tube onto a statically mounted shredding member rotated by a drive system included in a non-handheld base unit.

In at least some embodiments, the handheld kitchen appliance can be advanced together with the feeding tube downwardly towards the food support. Thus, the weight of the handheld kitchen appliance may assist in the pressing of the food against the food shredding member.

It is noted that the movability of the feeding tube relative to the food support may be enabled by the food support being slidably received in the feeding tube.

The feeding tube can have any suitable capacity. In some non-limiting examples, the feeding tube has a capacity of at least 200 mL, for example 200 to 300 mL, such as about 250 mL.

Such a feeding tube capacity may enable the juicer accessory to be used for providing a so-called "juice shot" from a single filling of the feeding tube.

In some embodiments, the juicer accessory comprises a juice permeable wall extending around the food shredding member to receive said juice thereon, with the juice permeable wall comprising a filter.

In such embodiments, the juice permeable wall may be arranged to be rotated by the motorized drive system to assist juice received thereon to pass through the filter.

Thus, centrifugal juicing functionality may be provided by the juicer accessory.

A fixed minimum spacing may be defined between the feeding tube and the food shredding member to permit the juice and pulp to reach the juice permeable wall.

In some embodiments, the food shredding member and the juice permeable wall are integrated in a single part.

This may facilitate assembly/disassembly of the juicer accessory.

In other embodiments, the food shredding member and the juice permeable wall may be distinct components of the juicer accessory.

In some embodiments, the juicer accessory comprises a drive transfer assembly configured to couple the motorized drive system with the food shredding member and with the juice permeable wall to enable independent control of the rotation of the food shredding member and the rotation of the juice permeable wall.

Such independent control may, for example, enable the food shredding member to be rotated at a different speed than the juice permeable wall.

Alternatively or additionally, the food shredding member and the juice permeable wall may be rotated at different times.

For instance, the food shredding member may be rotated to shred the food in a first step while the juice permeable wall is not being controlled to rotate, with the juice permeable wall being subsequently rotated in a second step to filter the juice while the food shredding member is not being controlled to rotate.

Such independent control can be implemented in any suitable manner, for example by the drive transfer assembly comprising a gear and/or clutch assembly by which torque from the motorized drive system is transferrable to the food shredding member and/or to the juice permeable wall.

In some embodiments, the juicer accessory comprises a pulp containment wall arranged to extend around an outer surface of the feeding tube, with arrangement of the pulp containment wall adjacent the juice permeable wall defining a pulp receiving space delimited by the outer surface of the feeding tube, an inner surface of the pulp containment wall, and an inner surface of the juice permeable wall.

Thus, the pulp, from which the juice is separated by the filter of the juice permeable wall, may be collected in the pulp receiving space.

The pulp receiving space may have a volume of 350 to 500 mL, such as about 370 mL.

In combination with a 200 to 300 mL capacity feeding tube, such a volume may enable multiple juice extractions without requiring the pulp receiving space to be emptied.

In some embodiments, the juice permeable wall and the pulp containment wall cooperate with each other such that the pulp containment wall is rotatable together with the juice permeable wall.

In some embodiments, the juicer accessory comprises a vessel having a bottom part and a sidewall, with the feeding tube and the sidewall extending from the bottom part to define a space between the sidewall and the feeding tube.

The vessel may provide a convenient way of mounting the feeding tube. For example, the vessel may be mountable in a container, e.g. in a further vessel and/or in a juice collection container.

In some embodiments, the pulp containment wall is arrangeable in the space between the sidewall and the feeding tube, with a gap permitting passage of the juice being defined between an outer surface of the pulp containment wall and an inner surface of the sidewall.

Thus, pulp may be collected in the pulp receiving space, while the filtered juice may be received in the gap between the outer surface of the pulp containment wall and the inner surface of the vessel's sidewall.

In some embodiments, one or more holes may be provided in the vessel for permitting the juice received in the gap to pass out of the vessel, for example to a further vessel and/or a juice collection container.

Alternatively or additionally, the gap defined between the outer surface of the pulp containment wall and the inner surface of the sidewall may assist to avoid rotation of the pulp containment wall, together with the juice permeable wall, being transferred to the vessel.

In some embodiments, the sidewall is detachable from the feeding tube.

This may facilitate cleaning of the vessel. In such embodiments, the above-described pulp containment wall may, for example, be omitted.

For instance, a first portion of the bottom part extending from the sidewall is detachably coupled to a second portion of the bottom part extending from the feeding tube.

Thus, the sidewall and the feeding tube can be detachably coupled to each other via the detachable coupling between the first and second portions of the bottom part of the vessel.

In some embodiments, the juicer accessory comprises an elongate member on which the food support is supported, with the elongate member being mountable on a tabletop such that the elongate member upstands away from the tabletop to support the food support above the tabletop.

Thus, the handheld kitchen appliance can be advanced together with the feeding tube downwardly towards the food support, with the weight of the handheld kitchen appliance thereby assisting in the pressing of the food against the food shredding member.

In some embodiments, the feeding tube has a hollow cylindrical shape, with an outer surface and an inner surface of the feeding tube having a circular cross-section.

In such embodiments, the food support may also be circular so as to slide along the cylindrical interior of the feeding tube in order to enable pressing of the food onto the food shredding member.

It is nonetheless noted that other suitable cross-sectional shapes for the feeding tube and the food support can be contemplated, such as polygonal, e.g. square, pentagonal, hexagonal, and so on.

Such polygonal cross-sectional shapes may assist to minimize or prevent unintentional rotation of components of the juicer accessory relative to each other.

More generally, polygonal or non-rotationally symmetric shapes of component(s) and/or rotationally locking coupling system(s) included in the juicer accessory may assist to minimize or prevent components of the juicer accessory from unintentionally rotating relative to each other.

In some embodiments, the food support is a push-fit into the feeding tube. Such a push-fit may enable loading of the food into the feeding tube and onto the food support without the feeding tube moving, e.g. sliding, relative to the food support during this loading.

In some embodiments, the juicer accessory comprises a further vessel having a bottom portion and a side portion, with the elongate member and the side portion extending from the bottom portion to define a recess between the elongate member and the side portion.

The further vessel may provide a convenient way of mounting the elongate member.

The bottom portion of the further vessel may, for example, enable the further vessel to rest on a tabletop.

In other examples, the further vessel may be mountable in a container, e.g. a juice collection container, which container has a base enabling the container to rest on a tabletop.

In some embodiments, the elongate member protrudes, such as to support the food support, beyond an upper end of the further vessel's side portion.

This may facilitate locating of the food support in the feeding tube.

In some embodiments, the feeding tube and the vessel are receivable in the recess between the elongate member and the side portion when the food shredding member is moved towards the food support.

In embodiments in which the pulp containment wall is included in the juicer accessory, the feeding tube, the vessel and the pulp containment wall together may be receivable in the recess when the food shredding member is moved towards the food support.

In some embodiments, the juicer accessory comprises a juice collection container, such as a cup or bottle, for collecting the juice.

One or more apertures may be provided in the further vessel for allowing juice received in the recess to pass into the juice collection container.

In other embodiments, the juice is collected in the further vessel and no additional juice collection container is included in the juicer accessory.

In alternative embodiments, the juice collection container is included in the juicer accessory but no further vessel is included.

In such embodiments, the food support may be mountable to the juice collection container.

Mounting the food support to the juice collection container can be achieved in any suitable manner, for example by an upstanding protrusion protruding from a base of the juice collection container being received in and engaging a recessed portion provided at an end of the elongate member opposing an end at which the food support is provided.

In some embodiments, the juicer accessory comprises a housing surrounding the food shredding member, with the feeding tube being cooperable with the handheld kitchen appliance via the housing.

The housing may assist to protect the user from the rotating food shredding member, whilst also assisting to retain juice within the juicer accessory. In some embodiments, the housing may also extend around the juice permeable wall.

In some embodiments, the housing and the sidewall contact each other to transfer movement of the handheld kitchen appliance to the feeding tube.

The housing may include an interface arranged to cooperate with the handheld kitchen appliance, for example with at least a portion of the handheld kitchen appliance's casing.

Since the handheld kitchen appliance's casing is not rotatable by the motorized drive system mounted within the casing, cooperation of the housing with the casing may mean that the housing is not rotatable by the motorized drive system.

Engagement of the motorized drive system with the food shredding member, and in some embodiments with the juice permeable wall, may mean that the food shredding member, and as the case may be the food shredding member and the juice permeable wall, rotate(s) within the non-rotatable housing.

Thus, the housing may not be rotatable by the motorized drive system, and the gap defined between the outer surface of the pulp containment wall and the inner surface of the sidewall may also mean that rotation of the pulp containment wall, together with the juice permeable wall, is not transferred to the vessel. This may, for example, be in combination with the above-mentioned polygonal or non-rotationally symmetric shapes of component(s) and/or rotationally locking coupling system(s) for minimizing or preventing components of the juicer accessory from unintentionally rotating relative to each other.

According to another aspect there is provided a juicer comprising a handheld kitchen appliance having a motorized drive system, and the juicer accessory according to any of the embodiments disclosed herein.

In some embodiments, the juicer accessory and/or the juicer includes a safety mechanism arranged to prevent rotation of the food shredding member when the housing and the sidewall of the vessel are not in contact with each other.

According to a further aspect there is provided a method of juicing using a juicer accessory having a food shredding member, a feeding tube, and a food support, the method comprising: receiving food in the feeding tube; cooperating the feeding tube with a handheld kitchen appliance; using the handheld kitchen appliance to rotate the food shredding member; and moving the handheld kitchen appliance together with the feeding tube cooperating therewith towards the food support such that the food received in the feeding tube is pressed by the food support against the rotating food shredding member to release juice from the food.

The juicer accessory may be according to any of the embodiments disclosed herein.

Embodiments described herein in relation to the method may be applicable to the juicer accessory and the juicer, and embodiments described herein in relation to the juicer accessory or the juicer may be applicable to the method.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 provides a cross-sectional view of a juicer accessory according to an example;
FIG. 2 provides an exploded view of the juicer accessory shown in FIG. 1;
FIGs. 3A and 3B provide views of a food shredding member and a juice permeable wall included in the juicer accessory shown in FIGs. 1 and 2;
FIG. 4 shows a vessel of the juicer accessory shown in FIGs. 1 and 2;
FIGs. 5A and 5B provide views of a pulp containment wall of the juicer accessory shown in FIGs. 1 and 2;
FIGs. 6A and 6B provide views of the pulp containment wall shown in FIGs. 5A and 5B received in the vessel shown in FIG. 4;
FIGs. 7A and 7B provide views of a further vessel of the juicer accessory shown in FIGs. 1 and 2;
FIG. 8 shows the further vessel shown in FIG. 7 received in a juice collection container;
FIG. 9 shows a further vessel according to another example;
FIG. 10 shows a juice collection container according to another example;
FIG. 11 shows a housing of the juicer accessory shown in FIGs. 1 and 2;
FIG. 12 shows a handheld kitchen appliance interfacing with the housing shown in FIG. 11;
FIGs. 13 and 14 schematically depict operation of a juicer comprising the juicer accessory shown in FIGs. 1 and 2;
FIG. 15 shows a juicer according to an example;
FIG. 16 depicts juicing using the juicer shown in FIG. 15; and
FIG. 17 provides a flowchart of a method according to an example.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a juicer accessory for a handheld kitchen appliance having a motorized drive system. The juicer accessory comprises a food shredding member arranged to be rotated by the motorized drive system. The juice accessory also includes a feeding tube in which food is receivable. The feeding tube is cooperable with, for example attachable to, the handheld kitchen appliance such that the feeding tube is movable together with the handheld kitchen appliance. The food is deliverable through the feeding tube towards the food shredding member. The juicer accessory further comprises a food support receivable in the feeding tube to support the food. The feeding tube is movable relative to the food support such that, when the handheld kitchen appliance with the feeding tube cooperating therewith is moved to bring the food shredding member towards the food support, the food in the feeding tube is pressed by the food support against the food shredding member to release juice from the food. Further provided is a juicer comprising the juicer accessory, and a method of juicing using such a juicer accessory.

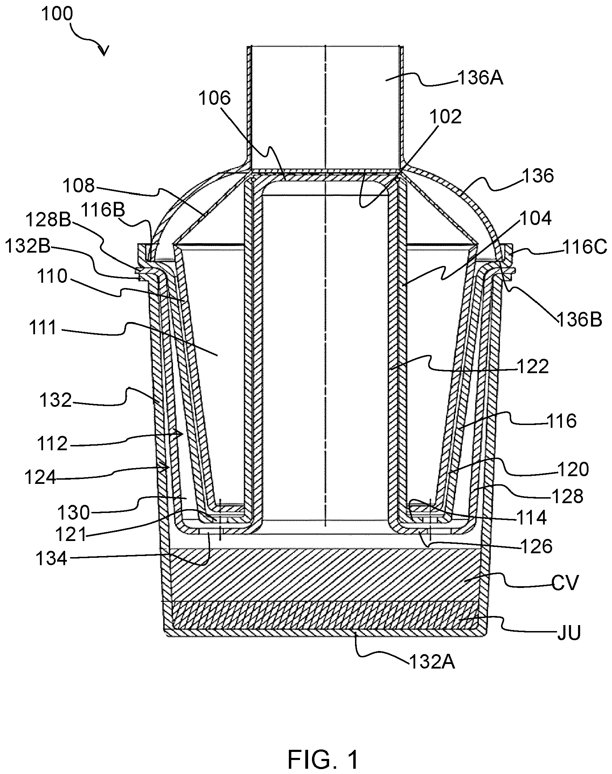

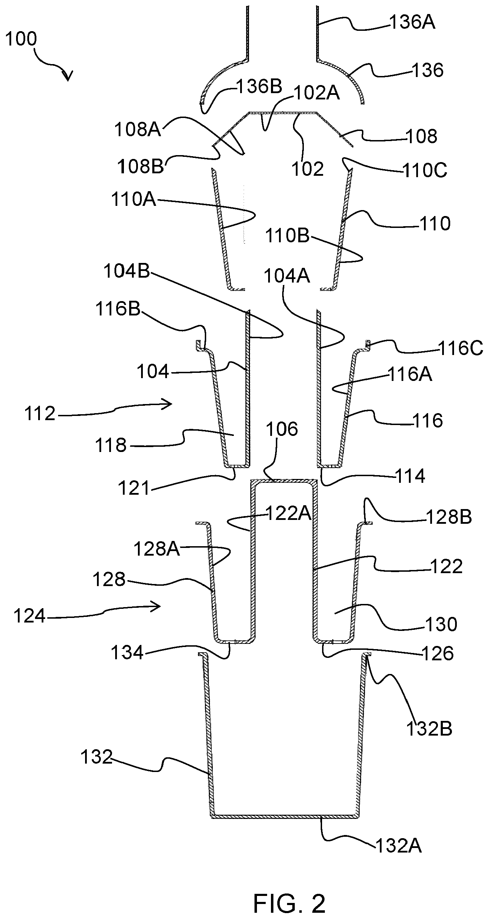

FIGs. 1 and 2 provide views of a juicer accessory 100 according to an example. The juicer accessory 100 comprises a food shredding member 102 arranged to be rotated by a motorized drive system of a handheld kitchen appliance (not visible in FIGs. 1 and 2).

The juicer accessory 100 includes a feeding tube 104 in which food (not visible in FIGs. 1 and 2) is receivable. The feeding tube 104 is cooperable with the handheld kitchen appliance such that when the user moves the handheld kitchen appliance, e.g. downwardly in the direction of a kitchen countertop, the feeding tube 104 is also moved together with the handheld kitchen appliance.

The feeding tube 104 can have any suitable capacity provided that, when filled with food, the feeding tube 104 is movable by the user together with the handheld kitchen appliance.

In some embodiments, the feeding tube 104 has a capacity of at least 200 mL, for example 200 to 300 mL, such as about 250 mL.

Such a feeding tube 104 capacity may enable the juicer accessory 100 to be used for providing a so-called "juice shot" from a single filling of the feeding tube 104.

The juicer accessory 100 additionally comprises a food support 106 for supporting the food while the food is within the feeding tube 104. The feeding tube 104 is movable relative to the food support 106 such that when the user moves the handheld kitchen appliance together with the feeding tube 104 in the direction of the food supported on the food support 106, e.g. by moving the handheld kitchen appliance downwardly in the direction of the food and the kitchen countertop, the food supported by the food support 106 and received within the feeding tube 104 can be brought closer to, and then into contact with, the rotating food shredding member 102.

In this way, juice can be released from the food within the feeding tube 104 that is pressed between the food support 106 and the rotating food shredding member 102.

This juice release approach can be regarded as a contrasting approach to that used in conventional juicers in which a pusher is used to press food in a feeding tube onto a statically mounted shredding member rotated by a drive system included in a non-handheld base unit.

Downward advancing of the handheld kitchen appliance together with the feeding tube 104 towards the food support 106 can facilitate juicing since the weight of the handheld kitchen appliance may assist in the pressing of the food against the food shredding member 102.

The juicer accessory 100 may add a juicing functionality to, for instance, an existing handheld kitchen appliance, thereby minimizing loss of kitchen storage space.

It is noted that the food shredding member 102 is preferably detachable from the motorized drive system.

Detachment of the food shredding member 102 can enable the handheld kitchen appliance to be used to provide one or more different food processing functions, such as blending, chopping, and so on, by attachment of alternative rotatable tool(s). Alternatively or additionally, such detachment of the food shredding member 102 may assist with cleaning of the food shredding member 102 after juicing.

In at least some embodiments, such as that shown in FIGs. 1 and 2, the food support 106 is slidably receivable in the feeding tube 104.

This may facilitate movement of the feeding tube 104 relative to the food support 106.

In some embodiments, the food support 106 is a push-fit into the feeding tube 104.

Such a push-fit may enable loading of the food into the feeding tube 104 and onto the food support 106 without the feeding tube 104 moving, e.g. sliding, relative to the food support 106 during this loading.

In some embodiments, such as that shown in FIGs. 1 and 2, the feeding tube 104 has a hollow cylindrical shape, with an outer surface 104A and an inner surface 104B of the feeding tube 104 having a circular cross-section.

In such embodiments, the food support 106 may also be circular so as to slide along the cylindrical interior of the feeding tube 104 in order to enable pressing of the food onto the food shredding member 102.

It is nonetheless noted that other suitable cross-sectional shapes for the feeding tube 104 and the food support 106 can be contemplated, such as polygonal, e.g. square, pentagonal, hexagonal, and so on.

Such polygonal cross-sectional shapes may assist to minimize or prevent unintentional rotation of components of the juicer accessory 100 relative to each other.

Also, other rotation stops are possible like a fin protruding from a cylindrical feeding tube 104.

More generally, polygonal or non-rotationally symmetric shapes of component(s) and/or rotationally locking coupling system(s) included in the juicer accessory 100 may assist to minimize or prevent components of the juicer accessory 100 from unintentionally rotating relative to each other.

In at least some embodiments, the food support 106 is statically mounted.

In other words, the food support 106 may not move during pressing of the food onto the rotating food shredding member 102.

The food shredding member 102 can have any suitable design provided that the food shredding member 102 is capable, in particular when rotated by the handheld kitchen appliance's motorized drive system, of cutting, grinding and/or shredding the food pressed thereagainst in order to release juice from the food.

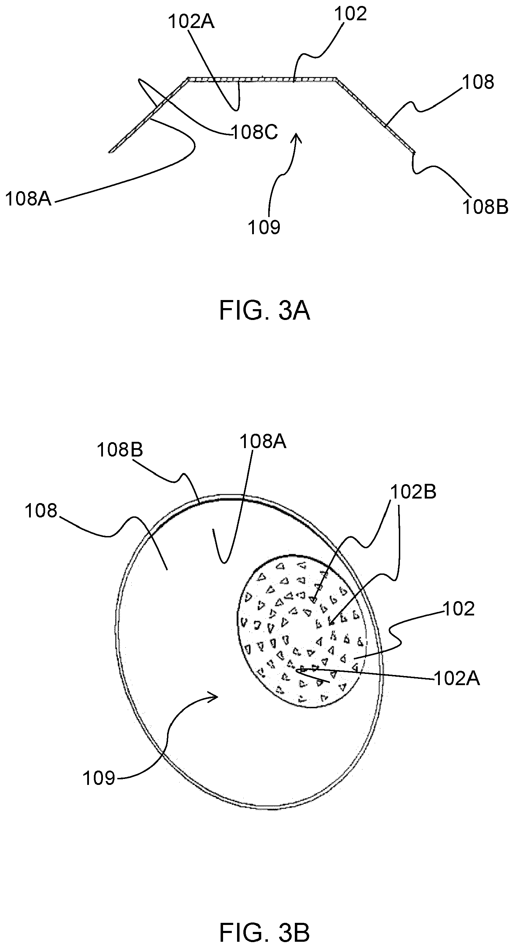

In some embodiments, such as that shown in FIGs. 3A and 3B, the food shredding member 102 comprises a support plate, for example a circular support plate, having a food-contacting surface 102A from which a plurality of protrusions 102B project, with the protrusions 102B being arranged to shred the food when the support plate is being rotated by the handheld kitchen appliance's motorized drive system.

The plurality of protrusions 102B can be arranged on the food-contacting surface 102A in any suitable manner, for example in concentric rings of protrusions 102B. An example of this shown in FIG. 3B.

The food shredding member 102, e.g. including the support plate and the protrusions 102B, can be made of any suitable material, such as plastic, a metal and/or a metal alloy.

In some embodiments, the food shredding member 102 is made of stainless steel.

Stainless steel may be a suitably robust material for shredding different types of food, and may also be relatively resistant to corrosion, particularly given the relatively acidic environment caused by the release of juice.

In some embodiments, such as that shown in FIGs. 1 to 3B, the juicer accessory 100 comprises a juice permeable wall 108 extending around the food shredding member 102 to receive the juice released from the food thereon, in other words on an inner surface 108A of the juice permeable wall 108.

During rotation of the food shredding member 102, the juice and pulp may be flung, in other words centrifugally forced, against the juice permeable wall 108.

To this end, the juice permeable wall 108 may extend annularly around the food shredding member 102.

In some embodiments, such as that shown in FIGs. 1 to 3B, the juice permeable wall 108 extends annularly around the support plate of the food shredding member 108 and away from the food-contacting surface 102A so as to define a cavity 109 delimited by the food-contacting surface 102A of the food shredding member 102 and the inner surface 108A of the juice permeable wall 108.

A fixed minimum spacing may be defined between the feeding tube 104 and the food shredding member 102 to permit the juice and pulp to reach the juice permeable wall 108.

The juice permeable wall 108 comprises a filter, and is arranged to be rotated by the motorized drive system to assist the juice received on the inner surface 108A of the juice permeable wall 108 to pass through the filter, leaving any pulp and uncut, unground and/or non-shredded food on the inner surface 108A of the juice permeable wall 108.

Thus, centrifugal juicing functionality may be provided by the juicer accessory 100.

Any suitable type of filter can be contemplated provided that the juice permeable wall 108 is capable of filtering juice. For example, the juice permeable wall 108 may comprise, or be defined by, one or more mesh/sieve portions.

The juice permeable wall 108 can be made of any suitable material, such as plastic, a metal, and/or a metal alloy.

In some embodiments, the juice permeable wall 108 is made of stainless steel, e.g. such that the juice permeable wall 108 takes the form of a stainless steel sieve.

In some embodiments, such as that shown in FIGs. 1 to 3B, the food shredding member 102 and the juice permeable wall 108 are integrated in a single part, e.g. in a single stainless steel part. This may facilitate assembly/disassembly of the juicer accessory 100.

In other embodiments, the food shredding member 102 and the juice permeable wall 108 are distinct components of the juicer accessory 100, or are at least detachable from each other.

This may facilitate cleaning of the food shredding member 102 and the juice permeable wall 108.

In some embodiments, such as that shown in FIGs. 1 to 3B, the food shredding member 102 and juice permeable wall 108 are coupled to each other and arranged to be rotated by the motorized drive system at the same speed as each other.

In such embodiments, the motorized drive system may be configured to rotate the food shredding member 102 together with the juice permeable wall 108 at a rotational speed between 10000 and 40000 revolutions per minute, preferably 20000 to 30000 revolutions per minute.

Such a rotational speed may provide efficient cutting, grinding and/or shredding of the food to release juice therefrom, and centrifuging of the juice through the juice permeable wall 108.

It is noted that the rotational speed may at least partly depend on the diameter of the juice permeable wall 108.

In some embodiments, such as that shown in FIGs. 1 to 3B, the diameter of the juice permeable wall 108 is 50 to 100 mm.

Such a diameter may, for instance, be particularly appropriate for a one-shot juicer/hand blender-driven juicer.

The diameter may be measured from a point on an outer surface 108C of the juice permeable wall 108 to a diametrically opposite point on the outer surface 108C of juice permeable wall 108.

In some embodiments, such as that shown in FIGs. 1 to 3B, the juice permeable wall 108 has a frustoconical shape.

In such embodiments, and more generally when the juice permeable wall 108 does not have a single uniform diameter, the diameter of the juice permeable wall 108 may be an average of the largest measured diameter and the shortest measured diameter.

In some embodiments, the juicer accessory 100 comprises a drive transfer assembly (not visible) configured to couple the motorized drive system with the food shredding member 102 and with the juice permeable wall 108.

The drive transfer assembly may, for example, be arranged such that the food shredding member 102 is rotated together with the juice permeable wall 108 at the rotational speed between 10000 and 40000 revolutions per minute, preferably 20000 to 30000 revolutions per minute.

In alternative embodiments, the drive transfer assembly is configured to enable independent control of the rotation of the food shredding member 102 and the rotation of the juice permeable wall 108.

Such independent control may, for example, enable the food shredding member 102 to be rotated at a different speed than the juice permeable wall 108.

Alternatively or additionally, the food shredding member 102 and the juice permeable wall 108 may be rotated at different times.

For instance, the food shredding member 102 may be rotated to shred the food in a first step while the juice permeable wall 108 is not being controlled to rotate, with the juice permeable wall 108 being subsequently rotated in a second step to filter the juice while the food shredding member 102 is not being controlled to rotate.

Such independent control can be implemented in any suitable manner, for example by the drive transfer assembly comprising a suitable gear and/or clutch assembly by which torque from the motorized drive system is transferrable to the food shredding member 102 and/or to the juice permeable wall 108.

In embodiments in which the rotation of the food shredding member 102 and the juice permeable wall 108 are independently controlled, the motorized drive system and the drive transfer assembly are configured to rotate the juice permeable wall 108 at a rotational speed of 500 to 5000, preferably between 3000 and 4000, revolutions per minute.

Such a rotational speed may provide efficient filtering of the juice through the juice permeable wall 108.

In such embodiments, the motorized drive system and the drive transfer assembly may be configured to rotate the food shredding member 102 at a rotational speed of 8000 to 20000, preferably between 9000 and 12000, revolutions per minute.

Such a rotational speed may provide efficient cutting, grinding and/or shredding of the food to release juice therefrom.

In some embodiments, the drive transfer assembly comprises a planetary gear assembly.

Such a planetary gear assembly may offer a simple yet effective way of rotating the juice permeable wall 108 while also allowing rotation of the food shredding member 102, e.g. at different rotational speeds relative to each other.

In some embodiments, the drive transfer assembly comprises the planetary gear assembly and a coupler releasably engagable with the planetary gear assembly, with the coupler being arranged to transfer drive from the planetary gear assembly to the juice permeable wall 108 when the coupler is engaged by the planetary gear assembly.

In such embodiments, the planetary gear assembly may be rotatable around a drive shaft, which drive shaft can be driven by the motorized drive system.

In such embodiments, the coupler is releasably engaged by the planetary gear assembly, for example by the planetary gear assembly moving relative to the coupler along an axis of rotation about which the drive shaft rotates.

In a first configuration, the planetary gear assembly is separated from the coupler such that the coupler is not engaged by the planetary gear assembly. In this first configuration, the juice permeable wall 108 is not rotated by the motorized drive system via the drive transfer assembly, but the food shredding member 102 is rotated by the motorized drive system via the drive transfer assembly.

In a second configuration, the coupler is engaged with the planetary gear assembly and the juice permeable wall 108 is rotated by the motorized drive system via the drive transfer assembly.

In some embodiments, a gear ratio of the planetary gear assembly is such that the juice permeable wall 108 rotates more slowly than the drive shaft, when the planetary gear assembly is transferring drive to the juice permeable wall 108, e.g. when the coupler is engaged by the planetary gear assembly.

It is noted that in other embodiments, the coupling between the motorized drive system and the juice permeable wall 108 and/or the food shredding member 102 is via magnetic coupling.

A clutch function can also be implemented by an overrunning clutch arranged such that when the motor of the motorized drive system is rotating in a first direction only the drive shaft with the food shredding member 102 is rotated at a first rotational speed, and when the motor of the motorized drive system is rotating in a second direction opposite to the first direction, the planetary gear assembly and hence the juice permeable wall 108 is rotated at a second rotational speed lower than the first rotational speed.

In some embodiments, such as that shown in FIGs. 1 to 6B, the juicer accessory 100 comprises a pulp containment wall 110 arranged to extend around the outer surface 104A of the feeding tube 104.

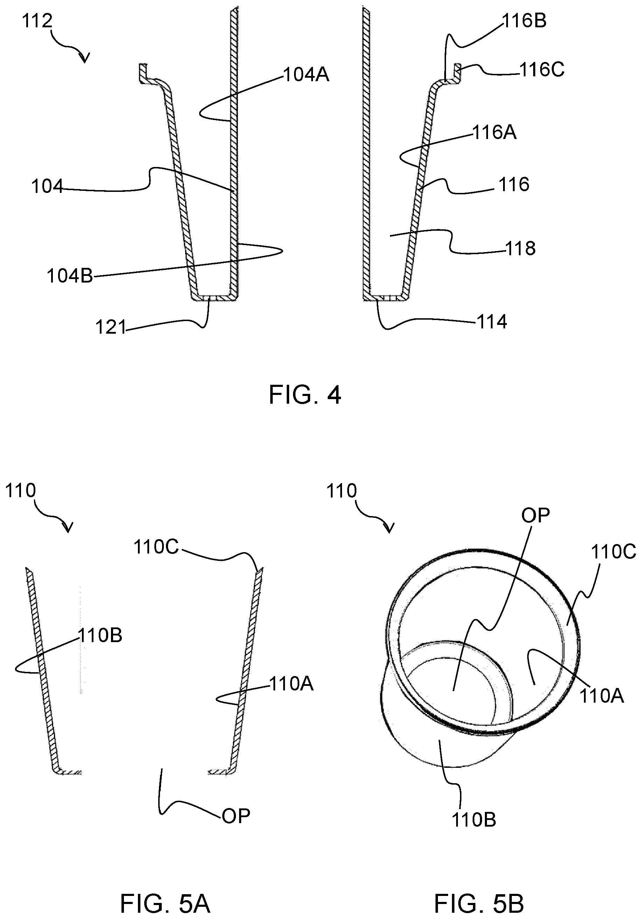

In some embodiments, and as best shown in FIG. 5B, the pulp containment wall 110 is an annular pulp containment wall 110 that extends around a perimeter, in this non-limiting example a circular circumference, of the outer surface 104A of the feeding tube 104.

The pulp containment wall 110 may delimit an opening OP through which the feeding tube 104 can pass in order for the pulp containment wall 110 to be arranged about the outer surface 104A of the feeding tube 104.

In such embodiments, and as best shown in FIGs. 1 and 2, arrangement of the pulp containment wall 110 adjacent the juice permeable wall 108 defines a pulp receiving space 111 delimited by the outer surface 104A of the feeding tube 104, the food-contacting surface 102A of the food shredding member 102, an inner surface 110A of the pulp containment wall 110, and the inner surface 108A of the juice permeable wall 108.

Thus, any pulp and uncut, unground and/or non-shredded food from which the juice is separated by the filter of the juice permeable wall 108 may be collected in the pulp receiving space 111.

The pulp receiving space 111 may have a volume of 350 to 500 mL, such as about 370 mL.

In combination with a 200 to 300 mL capacity feeding tube 104, such a volume may enable multiple juice extractions without requiring the pulp receiving space 111 to be emptied.

In some embodiments, such as that shown in FIGs. 1 to 6B, the pulp containment wall 110 extends to a brim 110C configured, e.g. shaped, to cooperate with an extremity 108B of the juice permeable wall 108.

In some embodiments, the cooperation between the brim 110C and the extremity 108B is such that the pulp containment wall 110 rotates together with the juice permeable wall 108.

Such cooperation may, alternatively or additionally, assist in retention of any pulp and uncut, unground and/or non-shredded food within the pulp receiving space 111.

For example, the brim 110C and the extremity 108B have shapes that complement each other such that the extremity 108B fits against and engages the brim 110C.

In other, more preferred, embodiments, the pulp containment wall 110 is statically positioned, in other words does not rotate together with the juice permeable wall 108.

The space between the juice permeable wall 108 and the pulp containment wall 110 may be as small as possible and constructed in a way that no, or only a negligible amount of, pulp can contaminate the juice.

The pulp containment wall 110 can be formed from any suitable material, for example plastic.

Making the pulp containment wall 110 from plastic can assist with making this component of the juicer accessory 100 more lightweight and thus easier to move together with the handheld kitchen appliance in order to press the food between the food support 106 and the food shredding member 102.

It is noted that a plastic pulp containment wall 110 can, in some embodiments, assist to compensate for an increased weight of the juicer accessory 100 owing to inclusion of a stainless steel food shredding member 102 and/or a stainless steel juice permeable wall 108.

In some embodiments, such as that shown in FIGs. 1 to 6B, the juicer accessory 100 comprises a vessel 112 having a bottom part 114 and a sidewall 116, with the feeding tube 104 and the sidewall 116 extending from the bottom part 114 to define a space 118 between the feeding tube 104 and the sidewall 116.

In such embodiments, the feeding tube 104 may be included in, e.g. integrated with, the vessel 112.

In particular, and as best shown in FIG. 4, the space 118 is delimited by an inner surface 116A of the sidewall 116 and at least a portion of the outer surface 104A of the feeding tube 104.

The vessel 112 may provide a convenient way of mounting the feeding tube 104.

The vessel 112 and the feeding tube 104 may be formed from any suitable material. In some embodiments, the vessel 112 and/or the feeding tube 104 is or are made of plastic.

Making the vessel 112, e.g. including the feeding tube 104, from plastic can assist with making such component(s) more lightweight and thus easier to move together with the handheld kitchen appliance in order to press the food between the food support 106 and the food shredding member 102, and can compensate, for example, for increased weight associated with inclusion of a stainless steel food shredding member 102 and/or a stainless steel juice permeable wall 108.

In some embodiments, such as that shown in FIGs. 1 to 6B, the pulp containment wall 110 is arrangeable in the space 118 between the sidewall 116 and the feeding tube 104, with a gap 120 permitting passage of the juice being defined between an outer surface 110B of the pulp containment wall 110 and the inner surface 116A of the sidewall 116.

Alternatively or additionally, the gap 120 defined between the outer surface 110B of the pulp containment wall 110 and the inner surface 116A of the sidewall 116 may assist to avoid rotation of the pulp containment wall 110, together with the juice permeable wall 108, being transferred to the vessel 112.

In some embodiments, the sidewall 116 is detachable from the feeding tube 104. This may facilitate cleaning of the vessel 112. In such embodiments, the above-described pulp containment wall 110 may, for example, be omitted.

For instance, a first portion of the bottom part 114 extending from the sidewall 116 is detachably coupled to a second portion of the bottom part 114 extending from the feeding tube 104. Thus, the sidewall 116 and the feeding tube 104 can be detachably coupled to each other via the detachable coupling between the first and second portions of the bottom part 114 of the vessel 112.

Referring to FIGs. 1 and 3A, having passed through the filter of the juice permeable wall 108 to reach the outer surface 108C of the juice permeable wall 108, and may be centrifuged onto the inner surface of the housing 136. From there, the juice may pass into the gap 120 between the outer surface 110B of the pulp containment wall 110 and the inner surface 116A of the vessel's 112 sidewall 116.

Any pulp and uncut, unground and/or non-shredded food may be collected in the pulp receiving space 111, while the filtered juice runs into the gap 120 outside the pulp receiving space 111.

In some embodiments, such as that shown in FIGs. 1 to 6B, one or more holes 121 are provided in, in other words delimited by, the vessel 112 for permitting the juice received in the gap 120 to pass out of the vessel 112, for example to a further vessel and/or a juice collection container, as will be described in more detail herein below.

In some embodiments, and as best shown in FIG. 4, the one or more holes 121 is or are provided in, in other words delimited by, the bottom part 114 of the vessel 112.

Thus, the filtered juice may pass out of the bottom part 114 of the vessel 112.

Referring in particular to FIGs. 1, 2, 7A, 7B and 8, the juicer accessory 100 may include an elongate member 122 on which the food support 106 is supported, e.g. mounted.

The elongate member 122 may be mountable on a tabletop or kitchen countertop such that the elongate member 122 upstands away from the tabletop/countertop to support the food support 106 above the tabletop/countertop.

Thus, the handheld kitchen appliance can be advanced together with the feeding tube 104 downwardly towards the food support 106, with the weight of the handheld kitchen appliance thereby assisting in the pressing of the food against the food shredding member 102 being rotated by the kitchen appliance's motorized drive system.

In some embodiments, such as that shown in FIGs. 1 to 8, the elongate member 122 is a cylindrical member 122, preferably a hollow cylindrical member 122 for weight-saving reasons, with one of the circular bases of the cylindrical member 122 defining the food support 106.

In such embodiments, the feeding tube 104 may have the above-described circular cross-section so as to receive the cylindrical member 122.

Other shapes for the elongate member 122 are also conceivable, such as the above-mentioned polygonal cross-sectional shape, provided that the elongate member 122 and the food support 106 can be accommodated within the feeding tube 104.

In some embodiments, such as that shown in FIGs. 1 to 8, the juicer accessory 100 comprises a further vessel 124 having a bottom portion 126 and a side portion 128, with the elongate member 122 and the side portion 128 extending from the bottom portion 126 to define a recess 130 between the side portion 128 and the elongate member 122.

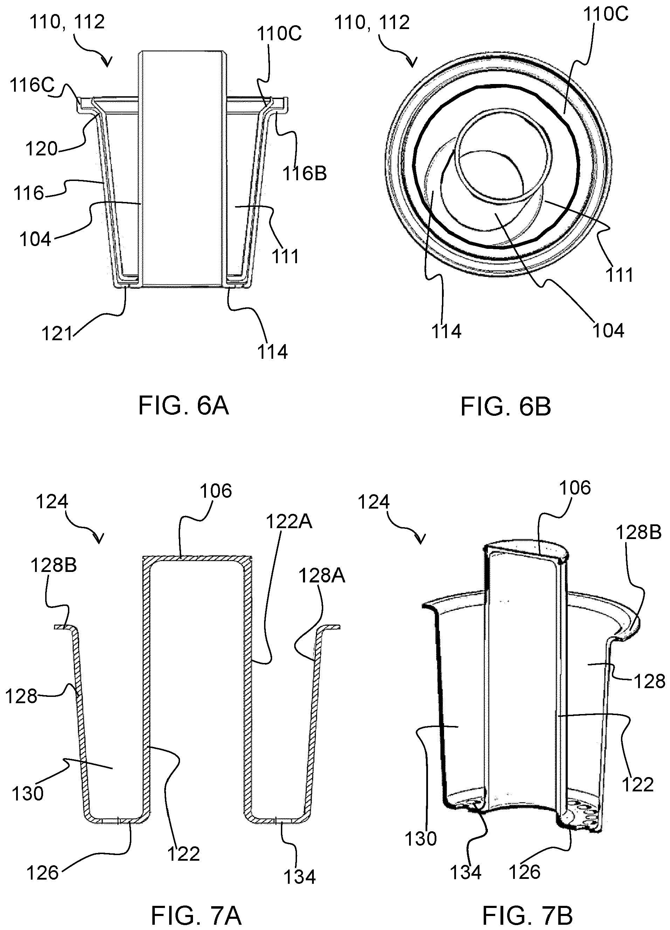

In particular, and as best shown in FIG. 7A, the recess 130 is delimited by an inner surface 128A of the side portion 128 and at least a portion of an outer surface 122A of the elongate member 122.

The further vessel 124 may provide a convenient way of mounting the elongate member 122, as will be explained in more detail herein below.

In such embodiments, the elongate member 122 may be included in, e.g. integrated with, the further vessel 124.

The further vessel 124 and the elongate member 122 may be formed from any suitable material. In some embodiments, the further vessel 124 and/or the elongate member 122 is or are made of plastic.

In some embodiments, such as that shown in FIGs. 1 to 8, the elongate member 122 protrudes, such as to support the food support 106, beyond an upper end 128B of the side portion 128 of the further vessel 124.

This may facilitate locating of the food support 106 in the feeding tube 104.

In some embodiments, and referring to FIG. 1, the feeding tube 104 and the vessel 112 are receivable in the recess 130 between the elongate member 122 and the side portion 128 when the food shredding member 102 is moved towards the food support 106 in order to press the food supported by the food support 106 against the food shredding member 102.

In embodiments, such as that shown in FIGs. 1 to 8, in which the pulp containment wall 110 is included in the juicer accessory 100, the feeding tube 104, the vessel 112 and the pulp containment wall 110 together may be receivable in the recess 130 when the food shredding member 102 is moved towards the food support 106.

In such embodiments, it may be desirable that the feeding tube 104, the vessel 112 and the pulp containment wall 110 are each made of plastic.

In certain embodiments, such as that shown in FIGs. 1 to 8, the juicer accessory 100 comprises a juice collection container 132, such as a cup or bottle, for collecting the juice.

In embodiments in which the further vessel 124 is included in the juicer accessory 100, the further vessel 124 may be mountable in such a juice collection container 132.

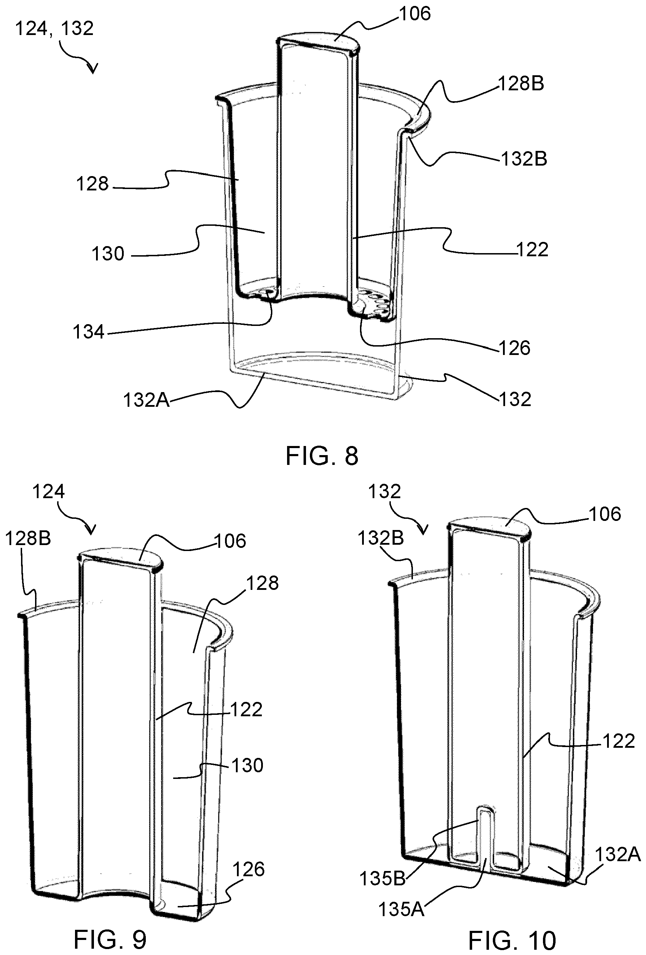

The juice collection container 132 may have a base 132A configured to enable the juice collection container 132 to rest on a tabletop/countertop, e.g. so as to cause the elongate member 122 to upstand away from the tabletop/countertop. An example of this is best shown in FIG. 8.

In some embodiments, the base 132A of the juice collection container 132 includes a mounting portion, for example comprising a non-slip portion (not visible), e.g. rubber feet, for contacting a kitchen countertop or table.

The further vessel 124 may be mountable in the juice collection container 132 in any suitable manner.

In some embodiments, such as that shown in FIGs. 1 to 8, the juice collection container 132 has a rim 132B extending around the juice collection container's 132 opening, and the upper end 128B of the side portion 128 is defined by a lip, which lip is arranged to cooperate with, e.g. rest on, the rim 132B of the juice collection container 132.

In embodiments in which the juicer accessory 100 comprises the further vessel 124, one or more apertures 134 may be provided in, in other words delimited by, the further vessel 124 for allowing juice received in the recess 130 to pass into the juice collection container 132.

In some embodiments, and as best shown in FIGs. 7A, 7B and 8, the one or more apertures 134 is or are provided in, in other words delimited by, the bottom portion 126 of the further vessel 124.

In some embodiments, such as that shown in FIGs. 1 to 8, the filtered juice passing from the gap 120 to the recess 130 via the one or more holes 121 may then pass out of the recess 130 and into the juice collection container 132 via the one or more apertures 134.

Referring to FIG. 1, the juice collection container 132 has, when the further vessel 124 is mounted in the juice collection container 132, a juice collection volume CV in which the juice JU, e.g. filtered juice JU, can be collected.

In alternative embodiments, such as that shown in FIG. 9, the juice, e.g. filtered juice, is collected in the further vessel 124 and no additional juice collection container is included in the juicer accessory 100.

In such alternative embodiments, the bottom portion 126 of the further vessel 124 may, for example, enable the further vessel 124 to rest on a tabletop/countertop, e.g. so as to cause the elongate member 122 to upstand away from the tabletop/countertop.

In such embodiments, the bottom portion 126 of the further vessel 124 can include a mounting portion, for example comprising a non-slip portion (not visible), e.g. rubber feet, for contacting a kitchen countertop or table.

In yet other embodiments, such as that shown in FIG. 10, the juice collection container 132 is included in the juicer accessory 100 but no further vessel is included.

In this case, the food support 106 may be mountable, in other words directly mountable without the intermediary further vessel 124, to the juice collection container 132.

Mounting the food support 106 to the juice collection container 132 can be achieved in any suitable manner.

In some embodiments, such as that shown in FIG. 10, the food support 106 is mounted to the juice collection container 132 via an upstanding protrusion 135A protruding from the base 132A of the juice collection container 132 being received in and engaging a recessed portion 135B provided at an end of the elongate member 122 opposing an end at which the food support 106 is provided.

Alternative ways of mounting the food support 106 to the juice collection container 132 can be contemplated, such as by the end of the elongate member 122 including the protrusion, with the recessed portion being delimited by the base 132A of the juice collection container 132.

In some embodiments, such as that shown in FIGs. 1 to 11, the juicer accessory 100 comprises a housing 136 surrounding the food shredding member 102, with the feeding tube 104 being cooperable with the handheld kitchen appliance via the housing 136.

The housing 136 may assist to protect the user from the rotating food shredding member 102, whilst also assisting to retain juice within the juicer accessory 100 during juicing.

In embodiments in which the juicer accessory 100 includes the juice permeable wall 108, the housing 136 may extend around the juice permeable wall 108 as well as around the food shredding member 102. Thus, the housing 136 can catch/retain the juice that is centrifuged through the juice permeable wall 108. An example of this is best shown in FIG. 1.

Whilst not visible in the Figures, the housing 136 may accommodate at least part of the drive transfer assembly.

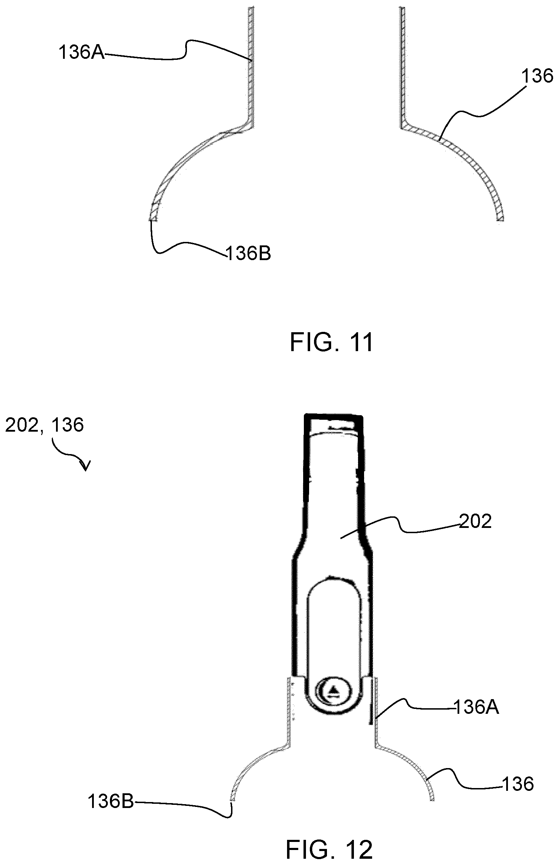

In some embodiments, and referring to FIG. 11, the housing 136 includes an interface 136A arranged to cooperate with the handheld kitchen appliance, for example with at least a portion of the handheld kitchen appliance's casing.

The interface 136A may include, or be defined by, a recess defined in the housing 136, which recess receives at least a portion of the handheld kitchen appliance's casing.

The housing 136 cooperating with the handheld kitchen appliance's casing via the interface 136A is shown in FIG. 12.

Since the handheld kitchen appliance's casing is not rotatable by the motorized drive system 202, cooperation of the housing 136 with the casing may mean that the housing 136 is not rotatable by the motorized drive system 202.

Engagement of the motorized drive system 202 with the food shredding member 102, and in some embodiments with the juice permeable wall 108, may mean that the food shredding member 102, and as the case may be the food shredding member 102 and the juice permeable wall 108, rotate(s) within the non-rotatable housing 136.

Thus, the housing 136 may not be rotatable by the motorized drive system, and the gap 120 defined between the outer surface 110B of the pulp containment wall 110 and the inner surface 116A of the sidewall 116 may also mean that rotation of the pulp containment wall 110, together with the juice permeable wall 108, is not transferred to the vessel 112. This may, for example, be in combination with the above-mentioned polygonal or non-rotationally symmetric shapes of component(s) and/or rotationally locking coupling system(s) for minimizing or preventing components of the juicer accessory 100 from unintentionally rotating relative to each other.

In some embodiments, the housing 136 and the sidewall 116 of the vessel 112 contact each other to transfer movement, e.g. downward movement, of the handheld kitchen appliance to the feeding tube 104.

In some embodiments, such as that shown in FIGs. 1 to 12, the sidewall 116 of the vessel 112 extends to a rim 116B that laterally protrudes in a direction away from the feeding tube 104, which rim 116B itself extends to an upstanding lip 116C that protrudes in a direction away from the bottom part 114 of the vessel 112.

In such embodiments, an extremity 136B of the housing 136 engages the rim 116B-upstanding lip 116C arrangement such that the housing 136 cooperates with, and in this case attaches to, the vessel 112.

In this manner, the feeding tube 104 cooperates, via the vessel 112 and the housing 136, with, and in particular attaches to, the handheld kitchen appliance. The handheld kitchen appliance can itself be attached to the housing 136 via engagement with the drive transfer assembly mounted to the housing 136 and/or cooperation of the housing 136 with at least a portion of the handheld kitchen appliance's casing.

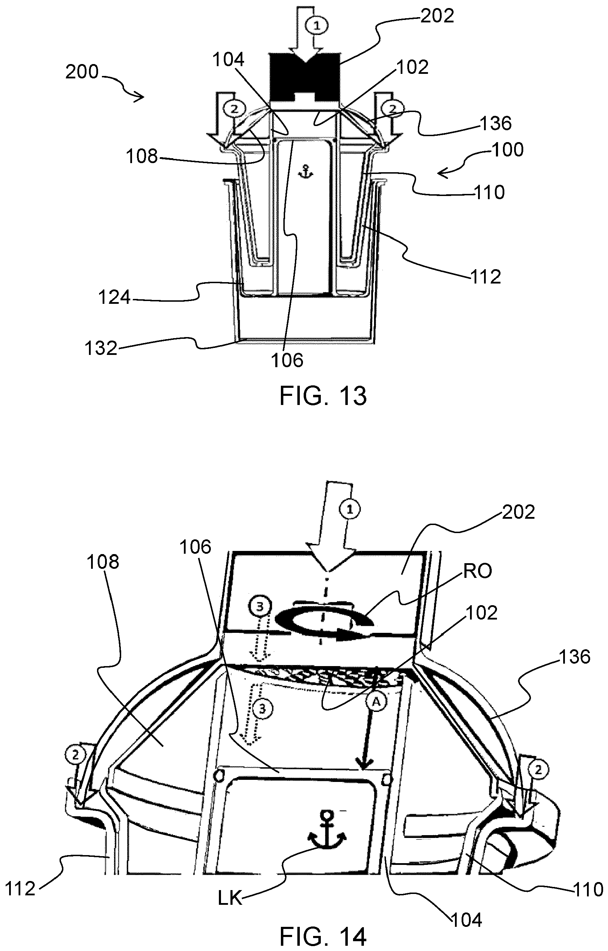

The present disclosure more generally contemplates the juicer accessory 100 being provided, e.g. supplied, to the user together with the handheld kitchen appliance. Thus, and with reference to FIGs. 13 and 14, an aspect of the present disclosure provides a juicer 200 comprising the juicer accessory 100 and the handheld kitchen appliance.

In some embodiments, the motorized drive system 202 includes a direct current motor, such as a brushless direct current motor.

The operation of such a brushless direct current motor has been found to be particularly effective in rotating the food shredding member 102 and, in some embodiments, rotating the juice permeable wall 108.

In at least some embodiments, the handheld kitchen appliance's motorized drive system 202 is housed within an elongate casing whose external surface comprises a handle portion for grasping by a user.

At least a portion of the elongate casing can cooperate with the interface 136A of the housing 136, for example by being received in a recess delimited by the housing 136, as previously described.

In some embodiments, the handheld kitchen appliance is in the form of a bar blender.

In some embodiments, the juicer accessory 100 and/or the juicer 200 includes a safety mechanism arranged to prevent rotation of the food shredding member 102 when the housing 136 and the sidewall 116 of the vessel 112 are not in contact with each other.

Such a safety mechanism may comprise, or be defined by, a microswitch (not visible) mounted on the sidewall 116, for example on an edge of the sidewall 116, such as on the rim 116B and/or on the upstanding lip 116C. Such a microswitch is actuated, thereby to permit rotation of the food shredding member 102, by the housing 136 contacting, e.g. cooperating with, such as becoming attached to, the sidewall 116 of the vessel 112.

Alternatively or additionally, the safety mechanism may comprise a mechanical bridge arranged to actuate a microswitch included in the motorized drive system 202 to permit rotation of the food shredding member 102 in response to the housing 136 contacting, e.g. cooperating with, such as becoming attached to, the sidewall 116 of the vessel 112.

The juicer 200 shown in FIG. 13 may be operated by cooperating the handheld kitchen appliance's casing with the housing 136, and engaging the handheld kitchen appliance's motorized drive system 202 with the food shredding member 102 and the juice permeable wall 108, e.g. via the drive transfer assembly.

The food support 106 in this example is positioned in the juice collection container 132, e.g. a cup or bottle, and the food support 106 and the juice collection container 132 may not be moved during juicing. In other words, the food support 106 is statically mounted in this example.

The feeding tube 104, together with the vessel 112 and the pulp containment wall 110, can be loosely positioned on the food support 106, and the feeding tube 104, e.g. having a capacity of about 250 mL, can be filled with food desired by the user for his/her juice drink, e.g. juice shot.

The handheld kitchen appliance and the feeding tube 104 can then be cooperated with each other, in this case by positioning the housing 136 on the sidewall 116 of the vessel 112 and affixing the housing 136 to the sidewall 116, e.g. via the extremity 136B of the housing 136 engaging the rim 116B-upstanding lip 116C arrangement of the sidewall 116.

The safety mechanism may ensure that the handheld kitchen appliance can only rotate the food shredding member 102 when the housing 136 is positioned on the sidewall 116 of the vessel 112 to which the feeding tube 104 is mounted. The components of the juicer accessory 100 are designed such that they cannot rotate in each other, as previously described.

Referring to FIG. 14, the motorized drive system 202 of the handheld kitchen appliance is activated, in other words turned on, as represented by the arrow RO.

In the movement denoted by "1" in FIG. 14, the handheld kitchen appliance, e.g. bar blender, is pushed downwards. The movement denoted by "2"corresponds to the feeding tube 104 being pushed downwards by the housing 136, in particular by the extremity 136B of the housing 136, as previously described.

The feeding tube 104 and the rotating shredding member 102 are cooperating with each other and are not axially moving in relation to each other. Rather, the feeding tube 104 and the rotating shredding member 102 are axially moving with the same speed and in the same direction toward the food support 106, as denoted by "3" in FIG. 14.

The food support 106 in this example is statically mounted in the juice collection container 132, in other words is not moving, as denoted in FIG. 14 by the anchor symbol LK. The space, distance "A", between the food support 106 and the food shredding member 102 becomes progressively smaller. The food, e.g. fruit and/or vegetables, is accordingly pushed by the food support 106 against the rotating food shredding member 102, thereby releasing juice.

In this non-limiting example, the pulp is centrifuged by rotation of the juice permeable wall 108. Juice is assisted by the rotation of the juice permeable wall 108 to pass through the filter and runs downwardly to be collected in the juice collection container 132. The pulp, in other words dry pulp, may be collected by the pulp containment wall 110.

For emptying and cleaning the components may be detached from each other and, for example, rinsed under the tap. The pulp containment wall 110 may be relatively easy to clean due to the relatively large opening OP left once the feeding tube 104 has been detached from the pulp containment wall 110.

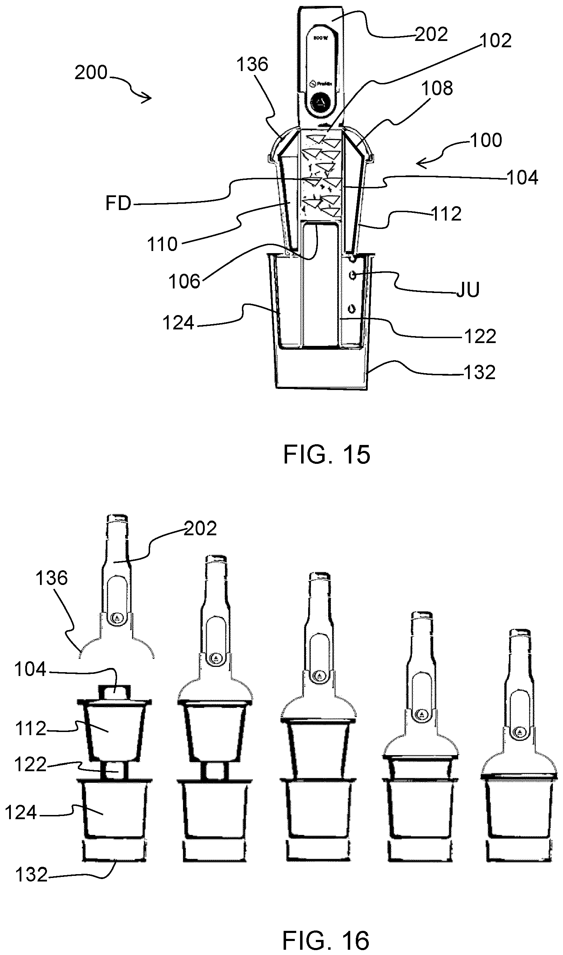

FIG. 15 shows the juicer 200 with the feeding tube 104 filled with food FD and drops of juice JU passing from the vessel 112, and more specifically from the gap 130, into the further vessel 124.

FIG. 16 shows the above-described steps involved in preparing juice from a single filling of the feeding tube 104.

Since the capacity of the feeding tube 104 may be at least 200 mL, for example 200 to 300 mL, such as about 250 mL, a single filling of the feeding tube 104 can enable the user to prepare about 100 mL of juice.

Since the pulp receiving space 111 may have a volume of 350 to 500 mL, such as about 370 mL, the user can juice several times in a row without requiring the pulp receiving space 111 to be emptied.

Juicing several times in a row can be done by pulling the feeding tube 104, e.g. including the vessel 112, up, releasing the handheld kitchen appliance from the feeding tube 104, refilling the feeding tube 104 with food, and cooperating the handheld kitchen appliance with the feeding tube 104, and repeating the juicing.

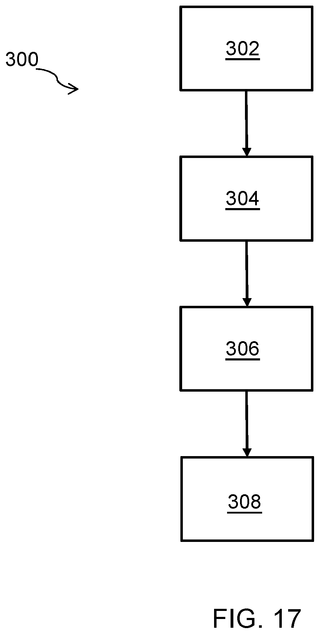

FIG. 17 provides a flowchart of a method 300 of juicing using a juicer accessory having a food shredding member, a feeding tube, and a food support. The method 300 may be implemented using the juicer accessory 100 according to any of the embodiments described herein.

The method 300 comprises receiving 302 food in the feeding tube, e.g. on the food support and within the feeding tube, cooperating 304 the feeding tube with a handheld kitchen appliance, using 306 the handheld kitchen appliance to rotate the food shredding member, and moving 308 the handheld kitchen appliance together with the feeding tube cooperating therewith towards the food support such that the food received in the feeding tube is pressed by the food support against the rotating food shredding member to release juice from the food.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage. If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A juicer accessory (100) for a handheld kitchen appliance having a motorized drive system, the juicer accessory comprising:
a food shredding member (102) arranged to be rotated by the motorized drive system;
a feeding tube (104) in which food is receivable, the feeding tube being cooperable with the handheld kitchen appliance such that the feeding tube is movable together with the handheld kitchen appliance, the food being deliverable through the feeding tube towards the food shredding member; and
a food support (106) receivable in the feeding tube to support the food, wherein the feeding tube is movable relative to the food support such that, when the handheld kitchen appliance with the feeding tube cooperating therewith is moved to bring the food shredding member towards the food support, said food in the feeding tube is pressed by the food support against the food shredding member to release juice from the food.

2. The juicer accessory (100) according to claim 1, comprising a juice permeable wall (108) extending around the food shredding member (102) to receive said juice thereon, the juice permeable wall comprising a filter, wherein the juice permeable wall is arranged to be rotated by the motorized drive system to assist said juice received thereon to pass through the filter.

3. The juicer accessory (100) according to claim 2, comprising a drive transfer assembly configured to couple the motorized drive system with the food shredding member (102) and with the juice permeable wall (108) to enable independent control of the rotation of the food shredding member and the rotation of the juice permeable wall.

4. The juicer accessory (100) according to claim 2 or claim 3, comprising a pulp containment wall (110) arranged to extend around an outer surface of the feeding tube (104), arrangement of the pulp containment wall adjacent the juice permeable wall (108) defining a pulp receiving space (111) delimited by an outer surface (104A) of the feeding tube, an inner surface (110A) of the pulp containment wall, and an inner surface (108A) of the juice permeable wall.

5. The juicer accessory (100) according to any one of claims 1 to 4, comprising a vessel (112) having a bottom part (114) and a sidewall (116), the feeding tube (104) and the sidewall extending from the bottom part to define a space (118) between the sidewall and the feeding tube; optionally wherein the sidewall is detachable from the feeding tube.

6. The juicer accessory (100) according to claim 5 when dependent from claim 4, wherein the pulp containment wall (110) is arrangeable in the space (118) between the sidewall (116) and the feeding tube (104), and wherein a gap (120) permitting passage of the juice is defined between an outer surface (110B) of the pulp containment wall and an inner surface (116A) of the sidewall.

7. The juicer accessory (100) according to any one of claims 1 to 6, comprising an elongate member (122) on which the food support (106) is supported, the elongate member being mountable on a tabletop such that the elongate member upstands away from the tabletop to support the food support above the tabletop.

8. The juicer accessory (100) according to claim 7, comprising a further vessel (124) having a bottom portion (126) and a side portion (128), the elongate member (122) and the side portion extending from the bottom portion to define a recess (130) between the elongate member and the side portion.

9. The juicer accessory (100) according to claim 8 when dependent from claim 5 or claim 6, wherein the feeding tube (104) and the vessel (112) are receivable in said recess (130) when the food shredding member (102) is moved towards the food support (106).

10. The juicer accessory (100) according to any one of claims 1 to 9, comprising a juice collection container (132) for collecting the juice.

11. The juicer accessory (100) according to claim 10 when dependent from claim 8 or claim 9, wherein one or more apertures (134) are provided in the further vessel (124) for allowing juice received in the recess (130) to pass into the juice collection container (132).

12. The juicer accessory (100) according to any one of claims 1 to 11, comprising a housing (136) surrounding the food shredding member (102), the feeding tube (104) being cooperable with the handheld kitchen appliance via said housing.

13. The juicer accessory (100) according to claim 12 when dependent from any one of claims 5, 6 and 9, wherein the housing (136) and the sidewall (116) contact each other to transfer movement of the handheld kitchen appliance to the feeding tube (104).

14. A juicer (200) comprising:
a handheld kitchen appliance having a motorized drive system (202); and
the juicer accessory (100) according to any one of claims 1 to 13.

15. A method (300) of juicing using a juicer accessory having a food shredding member, a feeding tube, and a food support, the method comprising:
receiving (302) food in the feeding tube;
cooperating (304) the feeding tube with a handheld kitchen appliance;
using (306) the handheld kitchen appliance to rotate the food shredding member; and
moving (308) the handheld kitchen appliance together with the feeding tube cooperating therewith towards the food support such that the food received in the feeding tube is pressed by the food support against the rotating food shredding member to release juice from the food.
